# EUROPÄISCHE PATENTSCHRIFT

(11) **EP 0 966 879 B1**
(45) Veröffentlichungstag und Bekanntmachung des Hinweises auf die Patenterteilung: **28.08.2002**
(21) Anmeldenummer: 99110758.2
(22) Anmeldetag: 04.06.1999
(51) Int. Cl.: A01F 29/22

(54) **Vorrichtung zum Schleifen der Häckselmesser an Trommel-Häckselmaschinen**
Grinding device for the cutting blades on drum-type chopping machines
Dispositif d'affûtage des couteaux hacheurs de machines de hachage à tambour

(30) Priorität: 27.06.1998 DE 19828766
(43) Veröffentlichungstag der Anmeldung: 29.12.1999
(73) Patentinhaber: Case Harvesting Systems GmbH, 01844 Neustadt (DE)
(72) Erfinder: Oliva, Christoph, 01844 Hohwald (DE)
(74) Vertreter: Müller, Lutz

(56) Entgegenhaltungen:
- DE-A- 4 128 483
- GB-A- 2 028 191
- US-A- 1 469 755
- US-A- 3 331 167
- US-A- 5 321 912

## Beschreibung

Die Erfindung betrifft eine Vorrichtung zum Schleifen der Häckselmesser an Trommel-Häckselmaschinen zum Häckseln landwirtschaftlicher Erntegüter, wie Mais, Welkgut, Gras, Luzerne, Stroh, Sonderkulturen und dergleichen, forstwirtschaftlicher Kulturen bzw. sogenannter nachwachsender Rohstoffe, mit den Merkmalen nach dem Oberbegriff des Patentanspruches 1.

Bei bekannten Vorrichtungen dieser Art, wie beispielsweise nach der DD 138 194, ist oberhalb und parallel zur Rotationsachse der Häckseltrommel im Häckseltrommelgestell ein in Lagerstellen verdrehbarer und fixierbarer Zentralträger aufgenommen. An einem seitlich am Zentralträger befestigten Flansch ist ein Antriebskettenrad drehbar gelagert, das mit einem Hydromotor in direkter Antriebsverbindung steht. Symmetrisch zum Antriebskettenrad in bezug auf die Mittelebene der Häckseltrommel befindet sich auf der anderen Seite am Zentralträger ein Umlenkkettenrad. Ein das Antriebskettenrad und das Umlenkkettenrad umschlingender Schleppkettentrieb wird von dem Hydromotor in einer Richtung angetrieben. Des weiteren sind am Zentralträger sich über dessen Lunge erstreckende Führungsbahnen angebracht, auf denen ein Schleifwagen auf durch Stellprismen nachstellbaren Laufrollen verschiebbar ist. Am Schleifwagen ist ein den Schleppkettentrieb umfassender Führungsbügel befestigt, der mit seinen Fangschlitzen einen im Schleppkettentrieb befestigten Mitnehmerbolzen aufnimmt. Der Schleifwagen, der gegenüberliegend vom Führungsbügel einen Spannrahmen zur Aufnahme mehrerer nebeneinander angeordneter Schleifsteine besitzt, befindet sich durch den im Schleppkettentrieb befestigten und demzufolge mit umlaufenden Mitnehmerbolzen in einer ständigen Hin- und Herbewegung über der für den Schleifvorgang vorzugsweise rückwärts drehenden Häckseltrommel. Die Zustellung der Schleifsteine in Richtung der Häckseltrommel erfolgt einerseits durch Verdrehen des gesamten Zentralträgers in seinen Lagerstellen von Hand, um die Schleifsteine von einer von der Häckseltrommel entfernten Parkposition in die Schleifposition zu bringen. Dazu wird über eine Handkurbel eine Stellspindel gedreht, deren Gewindeende mit einem am Zentrallträger befestigten Stellarm gelenkig verbunden ist. Diese Zustellbewegung wird während des Schleifvorganges in kleinen Schritten automatisch fortgesetzt, da der Schleifwagen am Ende jeder Hin- und Herbewegung mit Hilfe geeigneter Übertragungsmittel ein an der Stellspindel befestigtes Klinkenrad um einen Zahn weiterdreht. Nach dem Ende des Schleifvorganges werden die Schleifsteine durch Verschwenken des Zentralträgers infolge Drehens der Handkurbel an der Stellspindel in entgegengesetzter Richtung wieder in die Parkposition gebracht.
An dieser Schleifvorrichtung ist einmal der notwendige Bauraum zu bemängeln, da der die Schleifvorrichtung allein tragende Zentralträger einen großen Durchmesser haben muß, um ausreichend stabil zu sein. Seine Führungsbahnen, der Schleifwagen mit seinen Laufrollen zur Führung auf dem Zentralträger und die Antriebselemente zum Hin- und Herbewegen des Schleifwagens sind um ihn herum platzraubend angeordnet. Zum anderen ist die Neigung der gesamten Schleifvorrichtung zum Vibrieren von Nachteil, da sich das Spiel zwischen den Laufrollen des Schleifwagens und den Führungsbahnen am Zentralträger mit dem im Zustellmechanismus addiert. Außerdem ist der gesamte Zustellmechanismus noch elastisch, so daß dieser Vibrationseffekt dadurch noch verstärkt wird. Die negativen Folgen davon sind eine unerwünschte Geräuschentwickung und vorzeitiger Verschleiß.
Mit der DE 41 28 483 ist eine weitere Schleifvorrichtung bekannt geworden, die in weiterentwickelter Form in der Feldhäckslerbaureihe vom Typ "Jaguar 880/860" von der deutschen Firma CLAAS zur Anwendung kommt. Ihr Aufbau ist näher in der Bedienungsanleitung mit dem Druckvermerk "BA JAGUAR 880/860-D-06.94-450-V.+H." und in der Ersatzteilliste mit dem Druckvermerk "03. 94 Nr. 187 282.0 500" beschrieben und dargestellt. Sie besteht aus einer im Häckseltrommelgestell fixierten Führungsstange, die oberhalb der Häckseltrommel angeordnet und parallel zu deren Rotationsachse ausgerichtet ist. Auf dieser Führungsstange ist ein Schleifwagen mit der einen Seite in einer Gleitführung verschiebebeweglich befestigt und mit der anderen Seite stützt er sich an einer parallel zur Führungsstange ausgerichteten Führungsschiene über eine Führungsplatte und eine Laufrolle ab. Die zum Schleifen erforderliche Hin- und Herbewegung des den Schleifstein tragenden Schleifwagens wird von einem doppeltwirkenden Hydraulikzylinder erzeugt, der auf einer beidendig am Häckseltrommelgestell befestigten Kolbenstange parallel zur Häckseltrommel bewegt wird und durch Anlaufen eines Steuerhebels des mit ihm verbundenen Steuerventils an beidseitigen Anschlägen des Häckseltrommelgestells in seiner Bewegungsrichtung umsteuerbar ist. Diese Hin- und Herbewegung wird auf den Schleifwagen mit geeigneten Schleppkettentrieben übertragen.
Der einen kreisförmigen Querschnitt aufweisende Schlefstein ist in einer Außengewinde tragenden Führungsbuchse aufgenommen, die in eine ebenfalls mit Gewinde versehene Innenbohrung des Schleifwagens eingeschraubt ist. Der Schleifstein wird in der Führungsbuchse mit mehreren Buchsen und Druckringen festgehalten. Auf das obere Ende der Führungsbuchse ist ein Klinkenrad aufgeschraubt, durch dessen Verdrehen die Führungsbuchse gemeinsam mit dem Schleifstein radial auf die Häckseltrommel zu und von dieser weg verstellt werden kann. Das ist einmal zum Heranstellen des Schleifsteines an die Häckseltrommel von Hand möglich und während des Schleifvorganges automatisch, da das Klinkenrad durch Anlaufen an im Häckseltrommelgestell befestigte Anschläge um einen Zahn weitergedreht wird.
An dieser Schleifvorrichtung ist ebenfalls die Neigung zum Vibrieren in Verbindung mit einer unerwünschten Geräuschentwicklung und vorzeitigem Verschleiß zu bemängeln, da sich mehrere aus Toleranzen entstehende Spiele von der Gleitführung bis zur Klemmung des Schleifsteines addieren. Das ist einmal das Spiel zwischen dem Schleifwagen und seinen Gleitführungen an der Führungsstange und der Führungsschiene sowie zum anderen das Spiel im leichtgängigen Gewinde zwischen der Führungsbuchse und dem Schleifwagen, zwischen der Führungsbuchse und den den Schleifstein umfassenden Buchsen und Druckringen und schließlich noch zwischen letztgenannten Buchsen und Druckringen und dem Schleifstein selbst.
Schließlich ist noch mit der DE 29 23 256 C2 eine weitere Schleifvorrichtung bekannt geworden, die durch die motorgetriebene Hin- und Herbewegung des Schleifwagens und das ebenfalls motorgetriebene radiale Zustellen des Schleifsteines an die Messer der Häckseltrommel nach der EP 0 335 332 B1 weiterentwickelt wurde. Sie besteht aus einer koaxial zur Achse der Häckseltrommel ausgerichteten Führungsstange mit rundem Querschnitt, auf der der Schleifwagen über Kugellager an der Seite verschiebebeweglich gelagert ist, wo sich sein feststehender Schleifstein befindet. Auf der anderen Seite des Schleifwagens umgreifen zwei am Schleifwagen befestigte Führungsplatten ein Führungsrohr, das auch koaxial zur Achse der Häckseltrommel ausgerichtet ist. Es ist lagefixiert zwischen den Seitenwänden des Häckseltrommelgestells befestigt. Die zum Schleifen erforderliche Hin- und Herbewegung des Schleifwagens wird in dem Fall über einen parallel zur Führungsstange bzw. zum Führungsrohr zeigenden Elektrozylinder erzeugt, der am Häckseltrommelgestell angebracht ist. Sein relativ kurzer Hubweg wird auf die Enden eines Seiles übertragen, dessen Weg durch eine flaschenzugartige Führung vergrößert wird und an dem der Schleifwagen angehangen ist. Die radiale Zustellung des Schleifsteines in Richtung der Häckseltrommel ist durch Absenken der Führungsstange möglich. Dazu überragen die mit je einer Gewindebohrung versehenen Enden der Führungsstange die Seitenwände des Häckseltrommelgestells. In diese Gewindebohrungen sind lange Schrauben eingeschraubt, deren untere und obere Enden am Häckseltrommelgestell drehbar, aber lagefixiert befestigt sind. Die vertikal ausgerichteten Schrauben haben ein als Schneckenrad ausgebildetes Oberteil, das mit einer Schnecke in antriebsmäßiger Verbindung steht. Beide Schnekken sind Bestandteil einer Kurbelwelle, die entweder von Hand oder von einem geeigneten Motor in Drehung versetzt wird, so daß je nach Drehrichtung die Führungsstange mit dem Schleifstein auf die Häckselmesser zu oder von diesen weg bewegt wird. Durch den beschriebenen Aufbau dieser Schleifvorrichtung ist deutlich erkennbar, daß sie die gleichen Nachteile wie die beiden vorstehend beschriebenen Lösungen haben muß, was auf die Spiele in der Führung des Schleifwagens auf der Führungsstange bzw. dem Führungsrohr und die weiteren Spiele im radialen Zustellmechanismus des. Schleifsteines an die Häckseltrommel zurückzuführen ist.

Als ein weiterer Nachteil kommt noch hinzu, daß dieser Zustellmechanismus relativ viel und komplizierte Bauteile benötigt, so daß er teuer in der Herstellung ist.

Deshalb liegt der Erfindung die Aufgabe zugrunde, eine Vorrichtung zum Schleifen der Häckselmesser an Trommel-Häckselmaschinen zu schaffen, die in der Führung des Schleifwagens und im radialen Zustellmechanismus des Schleifsteines an die Häckseltrommel fertigungsbedingte Spiele weitestgehend vermeidet und die keine elastischen Übertragungselemente im Zustellmechanismus aufweist, so daß sie auch bei hoher Belastung während des Schleifvorganges vibrationsfrei und dadurch geräuscharm arbeitet und demzufolge auch eine hohe Lebensdauer besitzt.
Diese Aufgabe wird durch den Gegenstand des Patentanspruches 1 gelöst, wobei in den darauf sich beziehenden Unteransprüchen Merkmale aufgeführt sind, die diese Lösung in vorteilhafter Weise weiterentwickeln und auf die hier deshalb ausdrücklich verwiesen wird.
Durch die lagefixierten Geradführungen im Häckseltrommelgestell in Form einer Führungsstange einerseits und einer weiteren Geradführung andererseits ist erst einmal für die Befestigung der Schleifvorrichtung im Häckseltrommelgestell eine sehr stabile Basis vorhanden. Mit dem zweigeteilten Aufbau des Schleifwagens wird erreicht, daß der die Hin- und Herbewegung ausführende Schlitten praktisch spielfrei arbeitet, weil er durch seine konzentrische Lagerung um die Führungsstange einerseits und die linienförmige Abstützung an der Geradführung auf der gegenüberliegenden Seite ein äußerst stabiles Auflagedreieck auf vorstehend erwähntem stabilen Unterbau bildet, so daß das zum Zusammenbau dieser Teile sicher notwendige Spiel keinesfalls zum Abweichen des Schlittens aus einer exakten Geradführung führen kann. Durch das analoge Übertragen dieses Konstruktionsprinzips auf die den Schleifstein tragende Schwinge, wobei deren Lagerung analog wie beim Schlitten ebenfalls konzentrisch um die Führungsstange angebracht ist und deren gegenüberliegende Seite mit einer ausreichend stabilen Verbindung am Schitten befestigt ist, ist ein ebenso stabiles und somit Spiel ausschließendes Auflagedreieck wie beim Schlitten entstanden. Die Möglichkeit der Abstandsveränderung der stabilen Verbindung zwischen dem nur Hin- und
Herbewegungen ausführenden Schlitten realisiert das radiale Zustellen des Schleifsteines auf die Häckseltrommel hin oder davon weg. Die zumindest teilweise Anordnung der Lagerungen für den Schlitten und die Schwinge übereinander fährt zu einer schmalen und damit noch stabileren Bauweise des gesamten Schleifwagens.
Dabei hat es sich als zweckmäßig erwiesen, die Lagerung der Schwinge direkt auf der Führungsstange in einer relativ langen Ausbildung anzubringen, weil dadurch die auf den Schleifstein einwirkenden Reaktionskräfte auf kürzestem Wege in die Führungsstange eingeleitet werden. Demzufolge ist dann die Lagerung des Schlittens konzentrisch um die Lagerung der Schwinge herum angeordnet, die sie sinnvoller Weise wenigstens auf deren halben Länge umschließt.
Für die Geradführung des Schlittens auf der Seite gegenüber seiner Lagerung bietet sich eine Führungsschiene rechteckigen Querschnittes an, an deren Oberseite sich ein schmales Gleitstück und an der Unterseite eine Laufrolle des Schlittens abstützt.
Bei einer derartigen Anordnung der Schwinge und des Schlittens genügt es, als abstandsveränderliche Verbindung zwischen dem Schlitten und der Schwinge eine einfache Spille mit relativ kleinem Durchmesser zu verwenden, die einenends um ihre Längsachse verdrehbar und um einen Gelenkpunkt begrenzt verschwenkbar am Schlitten befestigt ist, und die anderenends mit ihrem Gewindestück mit einem verdrehbar an der Schwinge angebrachten Bolzen in Verbindung steht. Die verdrehbare und begrenzt verschwenkbare Befestigung der Spille am Schlitten läßt sich einfach durch vorgespannte Tellerfedern erreichen, die die Spille mit ihrem Kugelbund an einen zum Schlitten gehörenden Winkel ständig andrücken, so daß damit eventuelles Spiel zwischen der Spille und dem Winkel völlig ausgeschaltet ist. Andererseits ist ihre Verdrehfähigkeit mit geringen Kräften erhalten geblieben, da ihr Oberteil ein Klinkenrad verdrehfest aufnimmt, dessen Durchmesser vielfach größer als der der Spille ist. Dieses Klinkenrad kann zum Zustellen des Schleifsteines an die Häckseltrommel sowohl von Hand als auch durch Anlaufen ihrer Verzahnung an einen Anschlag am Häckseltrommelgestell automatisch gedreht werden.
Schließlich hat es sich noch als zweckmäßig erwiesen, auf dem unteren Ende der Spille Kontermuttern anzubringen, die die Schwenkbewegung der Schwinge auf die Häckseltrommel zu dann begrenzen, kurz bevor der Schleifstein abgeschliffen ist. Durch das Anbringen des Schleifsteines mittels Verkleben an eine metallische Schleifsteinplatte, die wiederum mit Sechskantschrauben von unten lösbar an der Schwinge angebracht ist, kann diese auch nach dem Lösen dieser Sechskantschrauben in einer um 180 Grad gedrehten Position an der Schwinge befestigt werden. Dadurch kann der Schleifstein noch von der anderen Seite abgeschliffen werden, so daß er bis auf einen kleinen Rest völlig abgeschliffen werden kann.
Damit sind die Vorteile der erfindungsgemäßen Schleifvorrichtung, daß sie durch ihren konstruktiven Aufbau in ihren Führungen zur Hin- und Herbewegung des Schleifwagens und zur Zustellung des Schleifsteines auf die Häckseltrommel hin keinerlei Spiel zuläßt und die auch im Zustellmechanismus keine elastischen Übertragsungselemente besitzt. Damit arbeitet sie auch bei hoher Belastung völlig vibrationsfrei und geräuscharm. Das ist auch ein maßgeblicher Grund für ihre hohe Lebensdauer.

Die Erfindung soll nun anhand eines Ausführungsbeispiels näher erläutert werden, wobei die einzelnen Figuren zeigen:
- Fig. 1: eine Draufsicht auf die Schleifvorrichtung mit den Umrissen der Häckseltrommel in strichpunktierten Linien
- Fig. 2: einen Schnitt nach Fig. 1 mit einer durch einzelne Häckselmesser angedeutete Häckseltrommel
- Fig. 3: eine Seitenansicht auf den Schlitten mit Getriebemotor
- Fig. 4: eine Draufsicht nach Fig. 3
- Fig. 5: eine Seitenansicht auf die Schwinge mit Führungsstange
- Fig. 6: eine Draufsicht nach Fig. 5

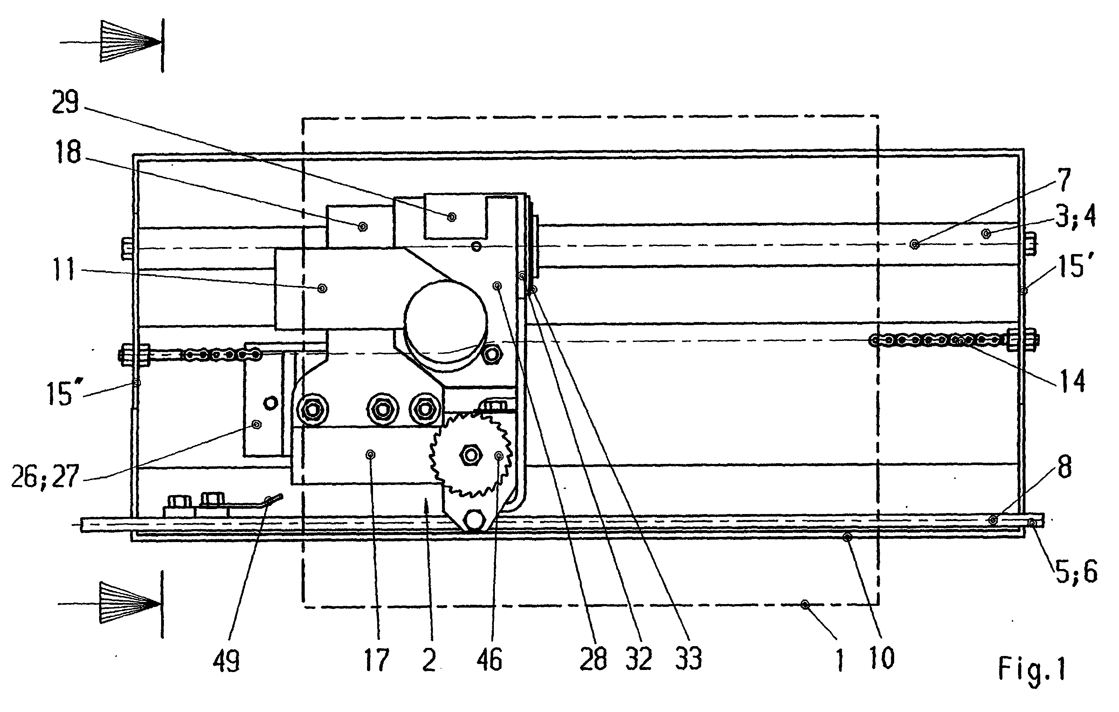

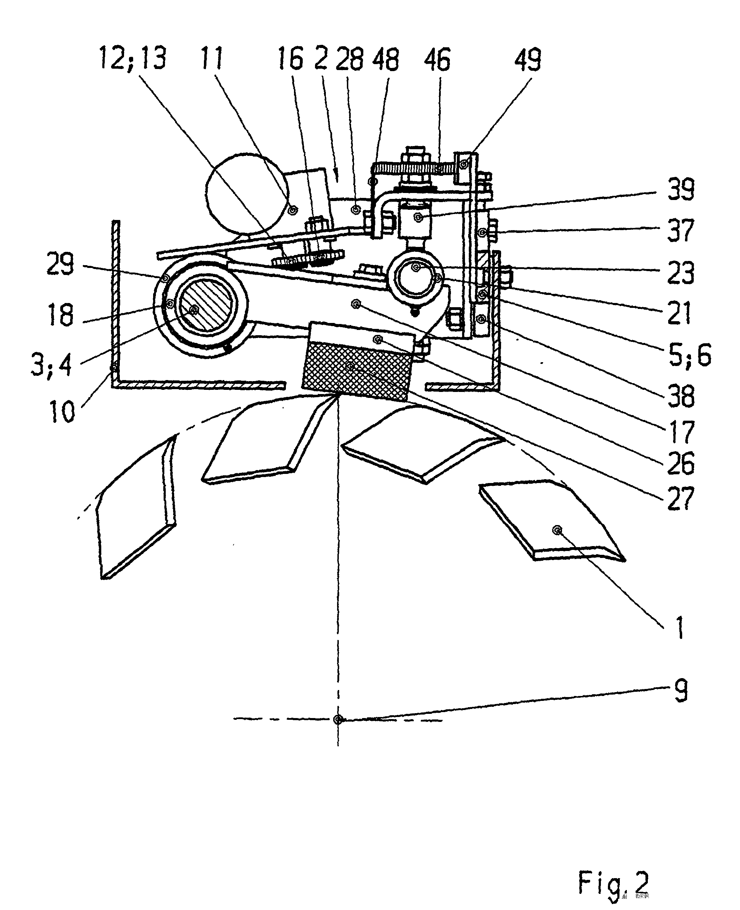

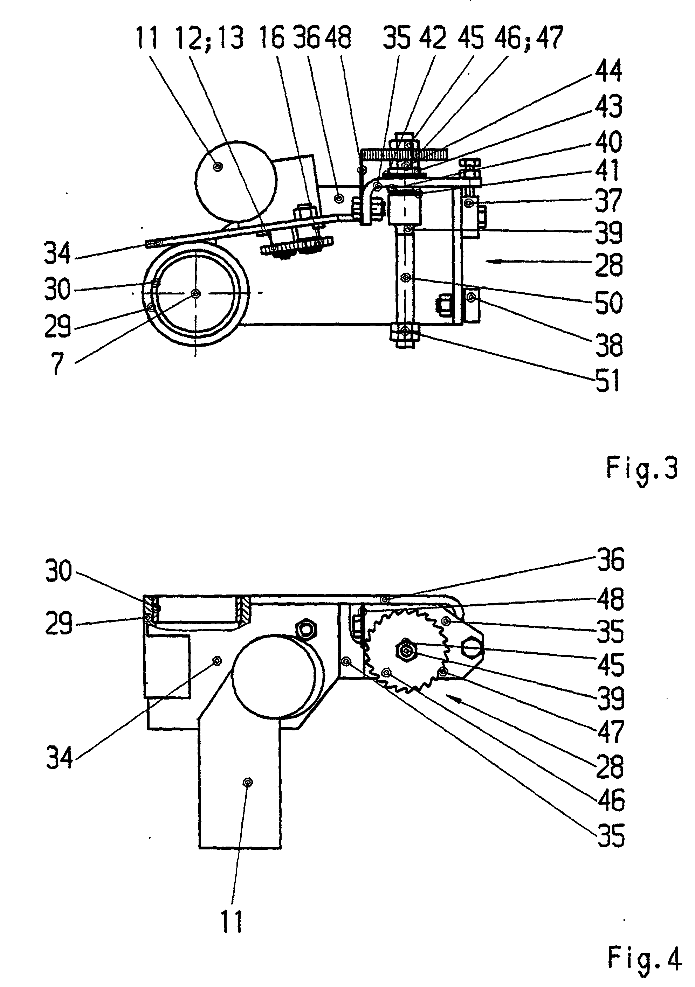

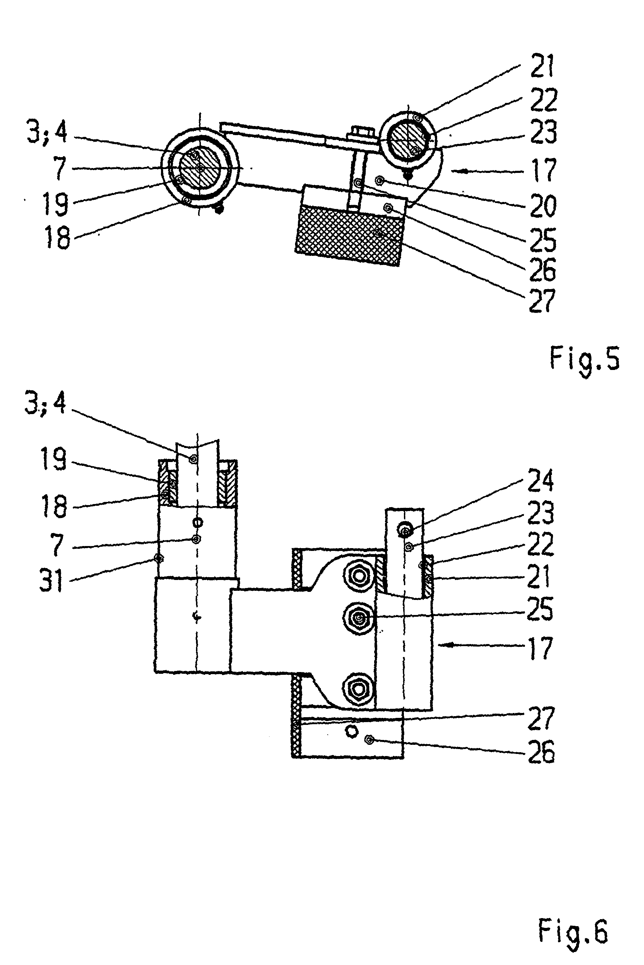

Die Figuren 1 und 2 zeigen die üblicherweise oberhalb der Häckseltrommel 1 angeordnete Schleifvorrichtung. Sie besitzt zur Führung ihres Schleifwagens 2 eine als Führungsstange 3 mit kreisförmigem Querschnitt ausgebildete Geradführung 4 und in Fahrtrichtung der Trommel-Häckselmaschine gesehen davor eine weitere Geradführung 5 in Form einer Führungsschiene 6 mit rechteckigem Querschnitt. Die Längsachse 7 der Führungsstange 3 und die Längsachse 8 der Führungsschiene 6 sind beide parallel zur Rotationsachse 9 der Häckseltrommel 1 ausgerichtet, wobei die Führungsstange 3 und die Führungsschiene 6 lagefixiert im Häckseltrommelgestell 10 angebracht sind
Zur Erzeugung einer Verschiebebewegung des Schleifwagens 2 zum Schleifen der Häckseltrommel 1 ist auf diesem ein elektrischer Getriebemotor 11 montiert, dessen mit einem Antriebskettenrad 12 ausgestattete Antriebswelle 13 sich annähernd vertikal nach unten erstreckt. Dieses Antriebskettenrad 12 steht mit einem gespannten Kettenstück 14 im Eingriff, das ebenfalls parallel zur Rotationsachse 9 der Häckseltrommel 1 ausgerichtet ist und mit seinen Enden an der linken bzw. der rechten Seitenwand 15', 15" des Häckseltrommelgestells 10 befestigt ist. Ein unmittelbar neben dem Antriebskettenrad 12 angeordnetes Führungsritzel 16, das sich in der gleichen Ebene wie das Antriebskettenrad 12 befindet, gewährleistet einen sicheren Eingriff des Antriebskettenrades 12 in das Kettenstück 14.
Der zweigeteilt aufgebaute Schleifwagen 2 besteht einmal aus der in den Figuren 5 und 6 dargestellten Schwinge 17, deren relativ lang bemessene Lagerung 18 beidseitig mit Gleitbuchsen 19 versehen ist, die die Führungsstange 3 umfassen, so daß die Lagerung 18 konzentrisch zur Längsachse 7 der Führungsstange 3 ausgerichtet ist. Von der Lagerung 18 gehen zwei nach vorn zeigende Stege 20 aus, die an ihrem vorderen Ende eine Hülse 21 aufnehmen. In diese Hülse 21 sind beidendig Gleitbuchsen 22 eingepreßt, die einen Bolzen 23 umfassen, der die Hülse 21 einseitig überragt und dort eine radial gerichtete und durchgängige Gewindebohrung 24 besitzt. Die Längsachse des Bolzens 23 befindet sich in paralleler Ausrichtung zur Längsachse 7 der Führungsstange 3. In der vorderen Hälfte unten an den Stegen 20 ist mittels drei langer Sechskantschrauben 25 eine Schleifsteinplatte 26 lösbar angebracht, an deren Unterseite der Schleifstein 27 angeklebt ist.
Der andere Teil des Schleifwagens 2 ist der Schlitten 28, der in den Figuren 4 und 5 dieses Ausführungsbeispiels als Baugruppe dargestellt ist. Er ist einenends ebenfalls mit einer Lagerung 29 ausgestattet, in deren Innenbohrung sich beidseitig je eine Gleitbuchse 30 befindet. Diese Gleitbuchsen 30 umfassen eine Gleitfläche 31 auf dem Außendurchmesser der Lagerung 18 der Schwinge 17, die ebenfalls konzentrisch zur Längsachse 7 der Führungsstange 3 ausgerichtet ist. Gegen axiales Abgleiten ist sie mit einer Scheibe 32 und einem Sicherungsring 33 gesichert. Auf der Lagerung 29 ist eine annähernd in horizontaler Richtung nach vorn zeigende Platte 34 befestigt, auf die von oben der Getriebemotor 11 aufgeschraubt ist und die sich nach vorn als horizontal ausgerichteter Winkel 35 fortsetzt. Ein vorn abgewinkeltes und senkrecht stehendes Seitenblech 36 verbindet die Lagerung 29, die Platte 34 und den Winkel 35 zum stabilen räumlichen Gebilde. Die vordere Abwinkelung des Seitenbleches 36 dient oben zur Aufnahme eines Gleitsteines 37 und einer darunter angegbrachten und zum Gleitstein 37 beabstandeten Laufrolle 38, die zwischen sich die am Häckseltrommelgestell 10 befestigte Führungsschiene 6 aufnehmen.
Zur Veränderung des Abstandes zwischen dem lediglich verschiebebeweglichen Schlitten 28 und der den Schleifstein 27 tragenden Schwinge 17 wird die Schwinge 17 mittels ihrer Lagerung 18 um die Führungsstange 3 verschwenkt. Dazu findet eine Spille 39 Anwendung, die mit ihrem oberen Teilstück so am Schlitten 28 angebracht ist, daß sie sich lediglich um ihre Längsachse verdrehen und um einen Gelenkpunkt begrenzt ausschwenken kann. Deshalb steckt die Spille 39 in einer Durchgangsbohrung im Winkel 35, deren Durchmesser etwas größer als der der Spille 39 an dieser Stelle ist. An der Unterseite des Winkels 35 liegt eine Kugelscheibe 40 mit ihrer flachen Seite an und in ihrer gegenüberliegenden kugligen Ausnehmung ein Kugelbund 41 der Spille 39. Oberhalb des Winkels 35 befinden sich wenigstens zwei Tellerfedern 42 und eine Scheibe 43, die von einer auf die Spille 39 aufgeschraubten und fixierbaren Sechskantmutter 44 mit Vorspannung auf die Oberseite des Winkels 35 gedrückt werden. Zwischen der fixierbaren Sechskantmutter 44 und einer weiteren Sechskantmutter 45 ist ein Klinkenrad 46 gegenüber der Spille 39 verdrehsicher befestigt. Ein am Winkel 35 angebrachtes und mit der Verzahnung 47 des Klinkenrades 46 im Eingriff stehendes Klemmblech 48 verhindert ein ungewolltes Zurückstellen der Zustellbewegung des Schleifsteines 27 gegenüber der Häckseltrommel 1. Zum schrittweisen Zustellen des Schleifsteines 27 nach jeder Hin- und Herbewegung des Schleifwagens 2 ist dagegen auf der rechten Seite im Häckseltrommelgestell 10 ein Anschlag 49 angebracht, der mit der Verzahnung 47 des Klinkenrades 46 in der am weitesten nach außen gefahrenen Position des Schleifwagens 2 an der dem Klemmblech 48 gegenüberliegenden Stelle in Eingriff kommt.

Damit nun die Schwinge 17 tatsächlich ihren Abstand zum Schlitten 28 durch Drehen der Spille 39 verändern kann, ist das untere Ende der Spille 39 als Gewindestück 50 ausgebildet, das in die Gewindebohrung 24 des Bolzens 23 in der Schwinge 17 eingeschraubt ist. Auf das den Bolzen 23 nach unten überragende Ende der Spille 39 sind Kontermuttern 51 aufgeschraubt.

### Bezugszeichenaufstellung

- 1: Häckseltrommel
- 2: Schleifwagen
- 3: Führungsstange
- 4: Geradführung
- 5: Geradführung
- 6: Führungsschiene
- 7: Längsachse
- 8: Längsachse
- 9: Rotationsachse
- 10: Häckseltrommelgestell
- 11: Getriebemotor
- 12: Antriebskettenrad
- 13: Antriebswelle
- 14: Kettenstück
- 15';15": Seitenwand
- 16: Führungsritzel
- 17: Schwinge
- 18: Lagerung
- 19: Gleitbuchse
- 20: Steg
- 21: Hülse
- 22: Gleitbuchse
- 23: Bolzen
- 24: Gewindebohrung
- 25: Sechskantschraube
- 26: Schleifsteinplatte
- 27: Schleifstein
- 28: Schlitten
- 29: Lagerung
- 30: Gleitbuchse
- 31: Gleitfläche
- 32: Scheibe
- 33: Sicherungsring
- 34: Platte
- 35: Winkel
- 36: Seitenblech
- 37: Gleitstein
- 38: Laufrolle
- 39: Spille
- 40: Kugelscheibe
- 41: Kugelbund
- 42: Tellerfeder
- 43: Scheibe
- 44: Sechskantmutter
- 45: Sechskantmutter
- 46: Klinkenrad
- 47: Verzahnung
- 48: Klemmblech
- 49: Anschlag
- 50: Gewindestück
- 51: Kontermuttern

## Patentansprüche

1. Vorrichtung zum Schleifen der Häckselmesser an Trommel- Häckselmaschinen, bestehend aus
- einem Schleifwagen (2), der an Geradführungen (4;5) verschiebebeweglich aufgenommen ist, deren Längsachsen (7;8) parallel zur Rotationsachse (9) der Häckseltrommel (1) ausgerichtet sind und die am Häckseltrommelgestell (10) lagefixiert angebracht sind,
- einem fest mit dem Schleifwagen (2) verbundenen Schleifstein (27), der annähernd in radialer Richtung auf die Häckseltrommel (1) zu- bzw. wegstellbar ist,
- einer Antriebseinrichtung zur Erzeugung der Verschiebebewegung des Schleifwagens (2) auf den Geradführungen (4;5),
**dadurch gekennzeichnet, daß**
a) ein Teil des Schleifwagens (2) als Schlitten (28) ausgebildet ist, der einenends eine konzentrisch zur Längsachse (7) einer als Geradführung (4) ausgebildeten Führungsstange (3) angeordnete Lagerung (29) aufweist und anderenends in der anderen Geradführung (5) in Richtung deren Längsachse (8) verschiebebeweglich aufgenommen ist,
b) der andere Teil des Schleifwagens (2) als eine den Schleifstein (27) tragende Schwinge (17) ausgebildet ist, die ebenfalls eine konzentrisch zur Längsachse (7) der als Geradführung (4) ausgebildeten Führungsstange (3) angeordnete Lagerung (18) aufweist und an einer von der Führungsstange (3) beabstandeten Stelle mit dem Schlitten (28) abstandsveränderlich verbunden ist,
c) die Lagerung (29) des Schlittens (28) und die Lagerung (18) der Schwinge (17) zumindest teilweise übereinander angeordnet sind

2. Vorrichtung nach Anspruch 1, **dadurch gekennzeichnet, daß** sich die Lagerung (18) der Schwinge (17) auf der Führungsstange (3) befindet und die Lagerung (29) des Schlittens (28) auf der Lagerung (18) der Schwinge (17), wobei die Lagerung (29) des Schlittens (28) wenigstens die halbe Länge der Lagerung (18) der Schwinge (17) aufweist.

3. Vorrichtung nach Anspruch 1, **dadurch gekennzeichnet, daß** die Geradführung (5) des Schlittens (28) von einer am Häckseltrommelgestell (10) befestigten Führungsschiene (6) rechteckigen Querschnitt gebildet wird, an deren Oberseite ein am Schlitten (28) befestigter Gleitstein (37) und an ihrer Unterseite eine am Schlitten (28) befestigte Laufrolle (38) weitestgehend spielfrei anliegt.

4. Vorrichtung nach den Ansprüchen 1 bis 3, **dadurch gekennzeichnet, daß** die abstandsveränderliche Verbindung zwischen dem Schlitten (28) und der Schwinge (17) durch eine Spille (39) hergestellt ist, die einenends um ihre Längsachse verdrehbar und um einen Gelenkpunkt begrenzt verschwenkbar am Schlitten (28) angebracht ist und die anderenends mit ihrem Gewindestück (50) mit einem in die Schwinge (17) eingesteckten und verdrehbaren Bolzen (23) in Verbindung steht.

5. Vorrichtung nach den Ansprüchen 1 und 4, **dadurch gekennzeichnet, daß** die verdrehbare und gelenkige Befestigung der Spille (39) am Schlitten (28) über einen an ihm befestigten Winkel (35) mit einer Durchgangsbohrung hergestellt ist, in der die Spille (39) steckt und einerseits mit ihrem Kugelbund (41) und eine diesen aufnehmende Kugelscheibe (40) an dem Winkel (35) anliegt und andererseits über eine an ihr fixierbare Sechskantmutter (44), eine Scheibe (43) und wenigstens eine vorgespannte Tellerfeder (42).

6. Vorrichtung nach den Ansprüchen 1, 4 und 5, **dadurch gekennzeichnet, daß** sich zwischen der fixierbar an der Spille (39) angebrachten Sechskantmutter (44) und einer weiteren Sechskantmuter (45) ein gegenüber der Spille (39) verdrehsicheres Klinkenrad (46) befindet.

7. Vorrichtung nach den Ansprüchen 1 und 4 bis 6, **dadurch gekennzeichnet, daß** auf dem Gewindestück (50) der Spille (39) Kontermuttern (51) zur Begrenzung des Schwenkwinkels der Schwinge (17) gegenüber dem Schlitten (28) in Richtung auf die Häckseltrommel (1) hin angeordnet sind.

8. Vorrichtung nach den Ansprüchen 1, 2, 4 und 7, **dadurch gekennzeichnet, daß** der Schleifstein (27) mit einer Schleifsteinplatte (26) verklebt ist, die an der Unterseite der Schwinge (17) in einer ersten Position und in einer in dieser Ebene um 180 Grad gedrehten zweiten Position an gleicher Stelle lösbar befestigt ist.

## Claims

1. A device for grinding the chopping knives on cylinder crop chopping machines, consisting of
- a grinding carriage (2), which is held on straight guides (4;5) so that it can traverse, the longitudinal axes (7;8) of which are arranged parallel to the axis of rotation (9) of the cylinder chopper (1) and are fixed as regards position onto the cylinder chopper frame (10),
- a grindstone (27) which is rigidly connected to the grinding carriage (2), which can be moved to and from the cutting cylinder (1) in an approximately radial direction,
- a driving arrangement for producing the traversing motion of the grinding carriage (2) on the straight guides (4;5), **characterised in that**
a) one part of the grinding carriage (2) is formed as a slide (28), which at one end has a support (29) arranged concentrically to the longitudinal axis (7) of a guide rod (3) formed as a straight guide (4) and at the other end is included the other straight guide (5) which is traversable in the direction of the longitudinal axis (8).
b) the other part of the grinding carriage (2) is formed as a rocker arm (17) carrying the grindstone (27), which has a support (18) likewise arranged concentrically to the longitudinal axis (7) of the guide rod (3) as a straight guide (4)
c) the support (29) of the slide (28) and the support of the rocker arm (17) are arranged at least partially on top of each other.

2. A device according to claim 1, **characterised in that** the support (18) of the rocker arm (17) is located on the guide rod (3) and the. support (29) of the slide (28) on the support (18) of the rocker arm (17), in which the support (29) of the slide (28) has at least half the length of the support (18) of the rocker arm (17).

3. A device according to claim 1, **characterised in that** the straight guide (5) of the slide (28) is formed from a guide rail (6) of rectangular cross section attached to the cylinder chopper frame (10), on its upper side a sliding stone (37) is attached to the slide (28) and on its lower side a roller (38) fits closely to the slide (28) essentially free from play.

4. A device according to claims 1 to 3, **characterised in that** the connection, which can be varied in distance, between the slide (28) and the rocker arm (17) is produced with a capstan (39), which at one end is attached to the slide (28) so as to be able to twist about its longitudinal axis and is traversable to a limited extent about a hinge point and which at the other end is connected, with its threaded rod (50) to a pin (23), which can twist, inserted in the rocker arm (17).

5. A device according to claims 1 and 4, **characterised in that** the twistable and articulated attachment of the capstan (39) to the slide (28) via an angle iron (35) attached to it, is achieved with a through-hole, into which the capstan (39) is inserted and on one side with its spherical washer (41) and one of these accepting a spherical disc (40) fits closely on the angle iron (35) and on the other side via a hexagonal nut (44) lockable to it, a washer (43) and at least one prestressed cup spring (42)

6. A device according to claims 1, 4 and 5, **characterised in that** between the lockable hexagonal nut (44) on the capstan (39) and a further hexagonal nut (45), there is located a ratchet wheel (46) which cannot twist relative to the capstan (39).

7. A device according to claims 1 and 4 to 6, **characterised in that** on the threaded rod (50) of the capstan (39) counter nuts (51) are arranged for limiting the swivelling angle of the rocker arm (17) relative to the slide (28) in the direction towards the cylinder chopper (1).

8. A device according to claims 1, 2, 4 and 7, **characterised in that** the grindstone (27) is stuck onto a grindstone plate (26), which is separably fixed to the underside of the rocker arm (17) in a first position and in a second position at the same place, which is rotated in this plane by 180 degrees.

## Revendications

1. Dispositif pour l'affûtage des couteaux de hacheuses à tambour, comprenant
- un chariot affûteur (2), qui est monté sur des guidages droits (4;5) de manière mobile, dont les axes longitudinaux (7;8) sont alignés parallèlement à l'axe de rotation (9) du tambour hacheur (1) et qui sont disposés dans une position fixe sur le bâti du tambour hacheur (10),
- une pierre à aiguiser (2) reliée fixement au chariot affûteur (27), laquelle peut être rapprochée ou éloignée du tambour hacheur (1) à peu près dans le sens radial,
- un dispositif d'entraînement pour la production du mouvement de déplacement du chariot affûteur (2) sur les guidages droits (4;5), **caractérisé en ce que** :
a) une partie du chariot (2) a la forme d'un coulisseau (28) qui présente, à l'une de ses extrémités, un logement (29), disposé concentriquement par rapport à l'axe longitudinal (7), d'une tige de guidage (3) ayant la forme d'un guidage droit (4) et, à l'autre extrémité, est accueilli de manière à pouvoir se déplacer dans l'autre guidage droit (5) dans la direction de son axe longitudinal (8),
b) l'autre partie du chariot affûteur (2) a la forme d'un bâton d'andains (17) portant la pierre à aiguiser (27), lequel bâton présente également un logement (18) disposé concentriquement par rapport à l'axe longitudinal (7) de la tige de guidage (3) ayant la forme d'un guidage droit (4) et relié, à distance de la tige de guidage (3), au coulisseau (28) de manière à modifier la distance,
c) le logement (29) du coulisseau (28) et le logement (18) du doigt d'andains (17) sont disposés au moins en partie l'un au-dessus de l'autre.

2. Dispositif selon la revendication 1, **caractérisé en ce que** le logement (18) du bâton d'andains (17) se trouve sur la tige de guidage (3) et le logement (29) du coulisseau (28) sur le logement (18) du bâton d'andains (17), le logement (29) du coulisseau (28) présentant au moins la demi-longueur du logement (18) du doigt d'andains (17).

3. Dispositif selon la revendication 1, **caractérisé en ce que** le guidage droit (5) du coulisseau (28) est constitué par une barre (6) de section rectangulaire fixée sur le bâti du tambour hacheur, à la partie supérieure de laquelle une pierre à aiguiser (37) fixée sur le coulisseau (28) et à la partie inférieure de laquelle un galet porteur (38) fixé sur le coulisseau (28) sont disposés sans jeu pour l'essentiel.

4. Dispositif selon les revendications 1 à 3, **caractérisé en ce que** la liaison à distance variable entre le coulisseau (28) et le doigt d'andains (17) est réalisée par un cabestan (39) qui est disposé, à une extrémité, de manière pivotable autour de son axe longitudinal et est orientable de manière limitée autour d'un point d'articulation sur le coulisseau (28) et qui, à l'autre extrémité, est en liaison par sa pièce filetée (50) avec un boulon (23) inséré dans le doigt d'andains (17) et pivotable.

5. Dispositif selon les revendications 1 et 4, **caractérisé en ce que** la fixation pivotable et articulée du cabestan (39) est réalisée sur le coulisseau (28) par une équerre de renfort (35) fixée dessus avec un alésage de traversée dans lequel le cabestan (39) s'insère et, d'une part, repose sur l'équerre de renfort (40) par sa rotule convexe (41) et une rondelle à portée sphérique (44) accueillant ladite rotule et d'autre part par un écrou à tête hexagonale (44) fixable dessus, une rondelle (43) et au moins une rondelle Belleville (42) précontrainte

6. Dispositif selon les revendications 1, 4 et 5, **caractérisé en ce que** entre l'écrou à tête hexagonale (44) monté fixement sur le cabestan (39) et un autre écrou à tête hexagonale (45) une roue à rochet (46) résistant à la torsion est montée en face du cabestan (39).

7. Dispositif selon les revendications 1 et 4 à 6, **caractérisé en ce que** sur la pièce filetée (50) du cabestan (39), des contre-écrous (51) sont disposés pour limiter l'angle de pivotement du bâton d'andains (17) par rapport au coulisseau (28) dans le sens du tambour hacheur (1).

8. Dispositif selon les revendications 1, 2, 4 et 7, **caractérisé en ce que** la pierre à aiguiser (27) est collée à une plaque (26) qui est fixée sur la face inférieure du bâton d'andains (17), dans une première position, et est, dans une deuxième position, pivotée de 180 degrés dans ce plan, au même endroit et de manière amovible.
